# EUROPEAN PATENT SPECIFICATION

(11) **EP 2 961 639 B1**
(45) Date of publication and mention of the grant of the patent: **07.06.2017**
(21) Application number: 14760402.9
(22) Date of filing: 05.03.2014
(51) Int. Cl.: B60R 9/042, B60P 1/04, B60P 1/44

(54) **DROP-DOWN UTILITY RACK FOR VEHICLES**
ABSENKGESTELL FÜR FAHRZEUGE
GALERIE UTILITAIRE DESCENDANTE POUR VÉHICULES

(30) Priority: 05.03.2013 US 201361773010 P
(43) Date of publication of application: 06.01.2016
(73) Proprietor: Ranger Design Inc., Montreal, Québec H9X 3P1 (CA)
(72) Inventor: PÉPIN, Alain, Ile Bizard, Québec H9C 2P5 (CA)
(74) Representative: Monzón de la Flor, Luis Miguel
(86) International application number: PCT/CA2014/000181
(87) International publication number: WO 2014/134712

(56) References cited:
- WO-A2-01/76913
- CA-A1- 2 535 688
- FR-A1- 2 680 736
- JP-A- 2005 053 403
- US-A- 5 058 791
- US-A- 5 884 824
- US-A1- 2009 140 021

## Description

### FIELD

The present subject-matter relates to a drop-down utility rack for vehicles, and more particularly to an actuated drop-down utility rack.

### BACKGROUND

Many types of operations require utility tools to be transported on a vehicle. When a particular job requires a utility tool, the operator can remove the tool from the vehicle.

While various utility tools can be transported, larger dimensioned tools, such as ladders, represent a particular challenge due their size. For smaller vehicles, such as utility vans or trucks, a preferred way of transporting a ladder is to use a ladder rack mounted onto the roof of the vehicle. Since the roof of the vehicle can be taller than the operator, removing the mounted ladder can be troublesome. For example, these troubles include an operator having to remove the ladder through two stages of movement, wherein the operator must stand beneath the descending ladder during the removal. Furthermore, in some cases, the operator must reach over his/her head and exert an upper movement in order to mount the ladder back onto the roof of the vehicle. In yet other cases, only one end of the ladder is lowered for dismounting, resulting in the ladder being lowered at an angle. FR 2 680 736 A1 discloses a prior art drop down assembly corresponding to the preamble of claim 1.

### SUMMARY

It would thus be highly desirable to provide a drop-down utility rack for vehicles, which would at least partially address the disadvantages of the existing technologies.

According to the invention there is provided a drop-down assembly according to claim 1. Exemplary embodiments are the object of the dependent claims.

### DRAWINGS

Reference will now be made to the accompanying drawings, showing by way of illustration non-limitative examples in which:
Figure 1 is a perspective view of the drop-down utility rack in an intermediate position in accordance to one exemplary embodiment;
Figure 2 is a cross-sectional view of the drop-down utility rack, taken along line A-A of Figure 1, in an intermediate position in accordance to one exemplary embodiment;
Figure 3 is a perspective view of the drop-down utility rack in an intermediate position in accordance to one exemplary embodiment installed on a roof rack;
Figure 4 is a side elevation view of the drop-down utility rack in an intermediate position in accordance to one exemplary embodiment;
Figure 5 is a perspective view of the drop-down utility rack in a tool transporting position in accordance to one exemplary embodiment installed on the roof of a vehicle and with a ladder positioned thereon;
Figure 6 is a perspective view of the drop-down utility rack in a tool transporting position in accordance to one exemplary embodiment;
Figure 7 is a front elevation view of the drop-down utility rack in a tool transporting position in accordance to one exemplary embodiment having a ladder positioned thereon;
Figure 8 is a side elevation view of the drop-down utility rack in a tool transporting position in accordance to one exemplary embodiment having a ladder positioned thereon;
Figure 9 is a perspective view of the drop-down utility rack in a tool access position in accordance to one exemplary embodiment installed on the roof of a vehicle and with a ladder positioned thereon;
Figure 10 is a perspective view of the drop-down utility rack in a tool access position in accordance to one exemplary embodiment;
Figure 11 is a perspective view of the drop-down utility rack in a tool access position in accordance to one exemplary embodiment having a ladder positioned thereon;
Figure 12 is a front elevation view of the drop-down utility rack in a tool access position in accordance to one exemplary embodiment having a ladder positioned thereon;
Figure 13 is a front elevation view of the drop-down utility rack in a tool access position in accordance to one exemplary embodiment; and
Figure 14 is a side elevation view of the drop-down utility rack in a tool access position in accordance to one exemplary embodiment having a ladder positioned thereon.

### DESCRIPTION OF VARIOUS EMBODIMENTS

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practiced without these specific details. Furthermore, this description is not to be considered as limiting the scope of the embodiments described herein in any way but rather as merely describing the implementation of the various embodiments described herein.

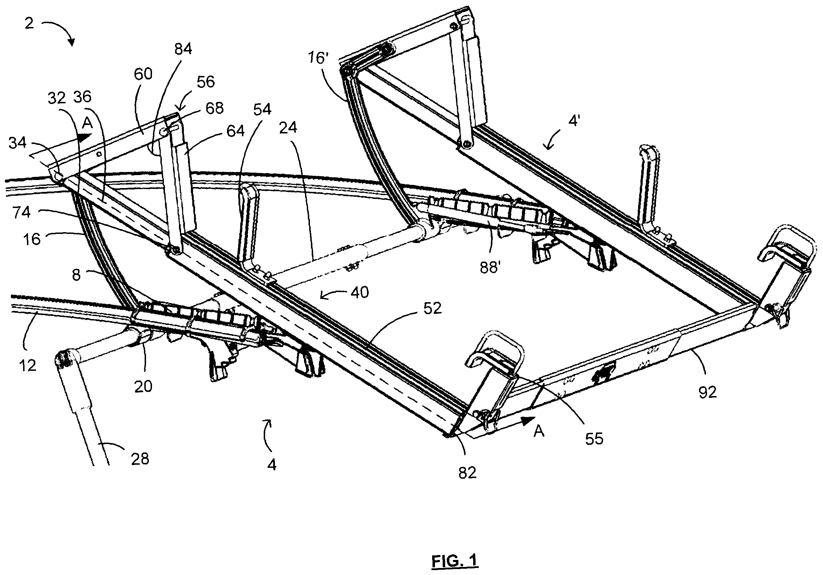

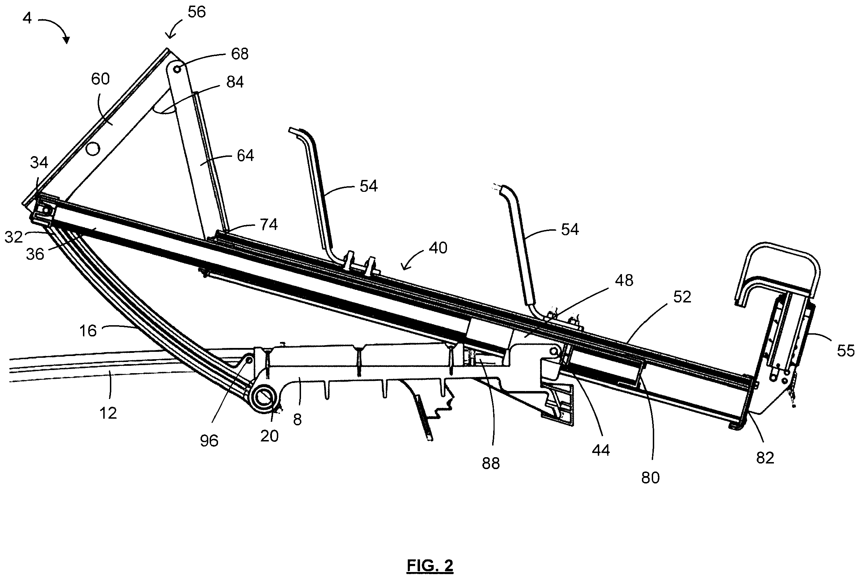

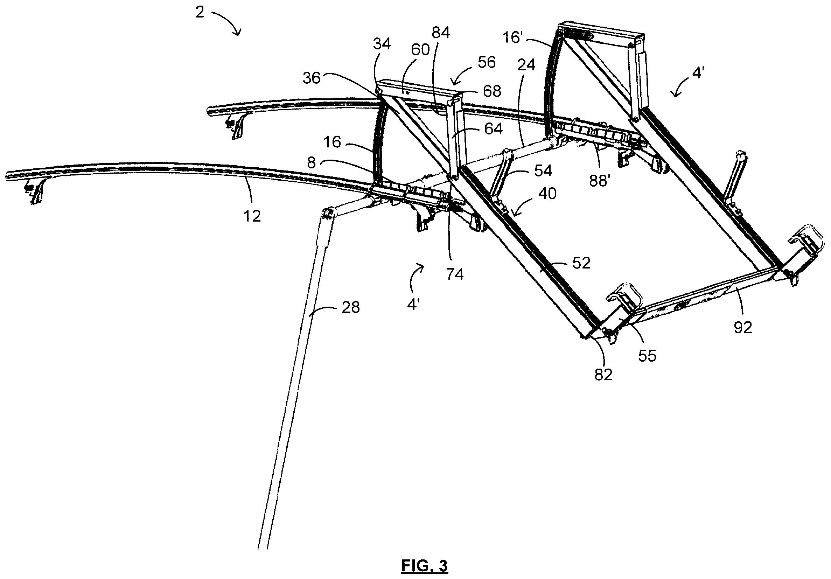

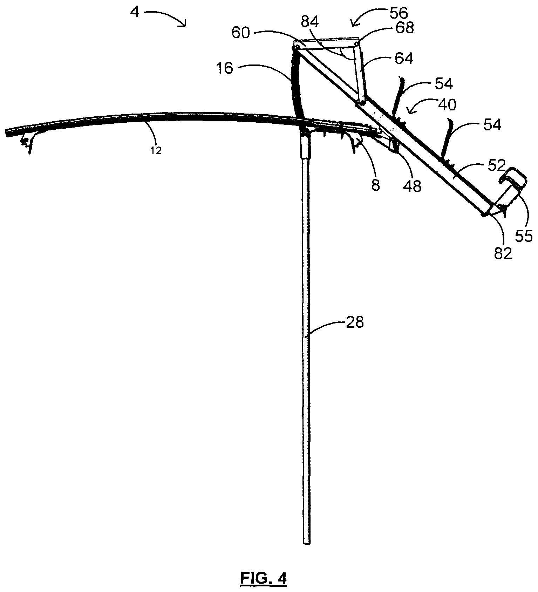

Referring to Figures 1 to 4, therein illustrated are various views of an exemplary drop-down utility rack 2 in an intermediate position according to one exemplary embodiment. The drop-down utility rack 2 has a drop-down assembly 4 for at least partly supporting an item, such as a ladder 5. The drop-down assembly 4 has a base frame 8 for mounting the assembly 4 onto a roof rack 12 of a vehicle 14. The base frame 8 can be mounted onto an end region of the roof rack 12 proximate a side of the vehicle 14.

An actuating arm 16 is pivotally coupled at a first end to the base frame 8. According to various exemplary embodiments, the actuating arm 16 is pivotally coupled to the base frame 8 via a rotatable joint 20. The rotatable joint 20 is further coupled to a rotating bar 24 of the base frame 8, wherein rotation of the rotating bar 24 causes the actuating arm 16 to pivot. For example, the rotating bar 24 can be further coupled at one end to a lever 28. When the drop-down assembly 4 is mounted onto the roof rack of the vehicle 14, the lever 28 can extend downwardly from a roof 30 of the vehicle 14 such that an operator can easily access the lever 28 from the side of the vehicle 14. As a result, an operator can easily cause the actuating arm 16 to pivot.

The actuating arm 16 is pivotally coupled at a second end 32 to a coupled end 34 of a first member 36 of a variable-length arm 40. The first member 36 is further pivotally and slidably coupled to the base frame 8 to define a coupling point 44. The coupling point 44 is located at a position that is remote from the position defined by the coupling of the actuating arm 16 to the base frame 8. For example, the actuating arm 16 is coupled to a first end of the base frame 8 and the first member 36 is coupled to an opposite end of the base frame 8. Pivoting of the actuating arm 16 causes the first member 36 to be pivoted and slidably displaced about the coupling point 44.

The first member 36 is pivotally and slidably coupled to the base frame 8 via a guiding joint 48. The guiding joint 48 is pivotally coupled to the base frame 8 to define the coupling point 44 and to provide the pivotal motion of the first member 36. The guiding joint 48 guides the sliding displacement of the first member 36. For example, the guiding joint 48 can be internal to the first member 36.

Continuing with Figures 1 to 4, the variable-length arm 40 has a second member 52 that is slidably coupled to the first member 36. The sliding displacement of the second member 52 is guided by the first member 36. At least a portion of the length of the second member 52 overlaps with a portion of the first member 36.

According to various exemplary embodiments, the first member 36 and the second member 52 are arranged end-to-end and have an extendible member attached therebetween. For example, the extendible member is a springloaded bellows.

According to various exemplary embodiments, the first member 36 and the second member 52 of the variable-length arm 40 have a telescoping relationship with respect to each other. For example, the first member 36 can be an internal member and the second member 52 is external to the first member 36.

At least one tool-retaining member 54 is coupled to a surface of the external member 52 of the telescoping arm 40. The tool-retaining member 54 can be any member that can support a tool to be transported. For example, the at least one tool-retaining member 54 includes support brackets attached to an upper surface of the external member 52 for supporting a portion of a ladder. For example, a first support bracket 54 can be located at a position intermediate the length of the external member 52. For example, a second support bracket 55 can be attached to an end of the external member 52. For example, the position of the tool-retaining member 54 can be adjustable to accommodate different objects to be supported. For example, different ladders having different widths can be supported within the support brackets. Furthermore, additional support brackets 54 can be attached to the external member 52 where required.

A composite linkage 56 couples the actuating arm 16 to the external member 52. The composite linkage 56 causes sliding displacement of the external member 52 in response to pivoting of the actuating arm 16.

According to various exemplary embodiments, the composite linkage 56 is an A-frame 56 formed of a fixed arm 60 and a pivotal arm 64. A first end of the fixed arm 60 is pivotally joined by a pivotal joint 68 to a first end of the pivotal arm 64. A second end of the fixed arm 60 opposite the pivotal joint 68 is fixedly coupled to the second end of the actuating arm 16. For example, the actuating arm 16 can have a transverse member and the fixed arm 60 of the A-frame 56 is coupled to the actuating arm 16 via at least one point on the transverse member. It will be understood that the fixed arm 60 is described herein as being "fixed" because it is fixed relative to the actuating arm 16. That is, the fixed arm 60 forms a constant angle with the actuating arm 16 as the actuating arm 16 is pivoted. However, the fixed arm 60 is rotated with the pivotal movement of the actuating arm 16. A second end of the pivotal arm 64 opposite the pivotal joint 68 is pivotally coupled to a coupled end 74 of the external member 52.

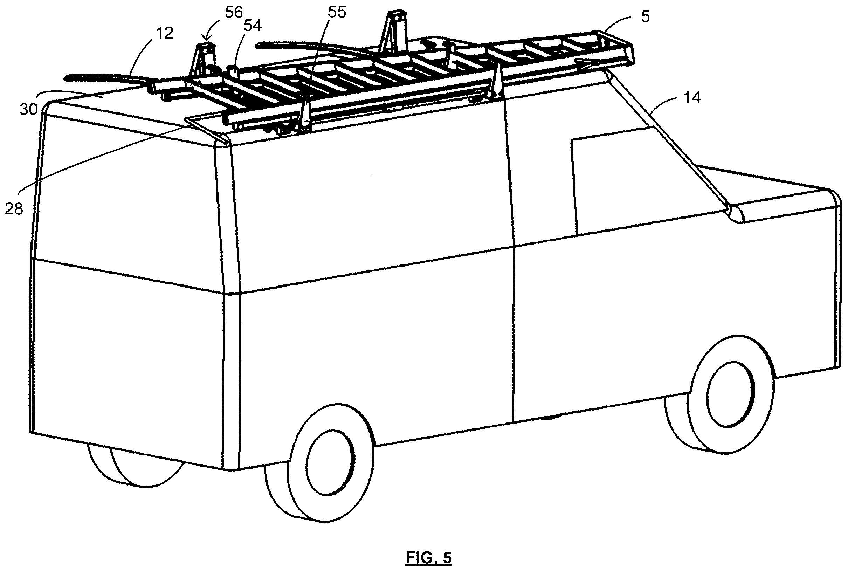

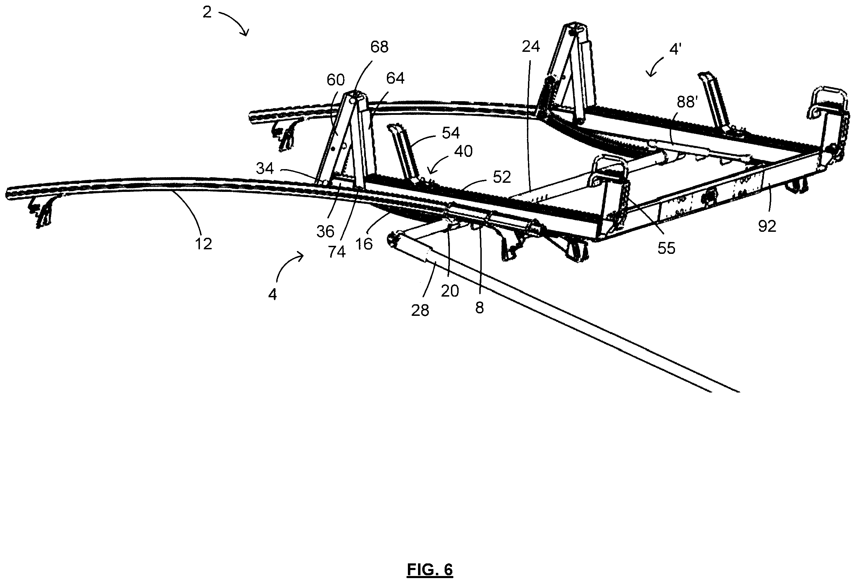

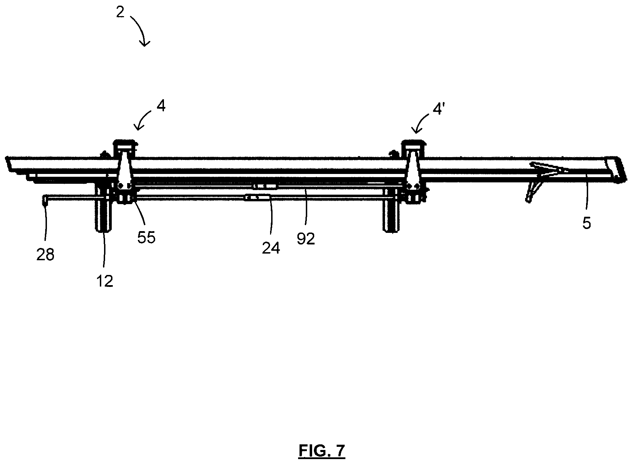

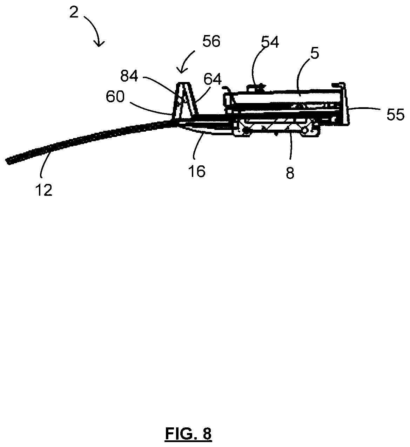

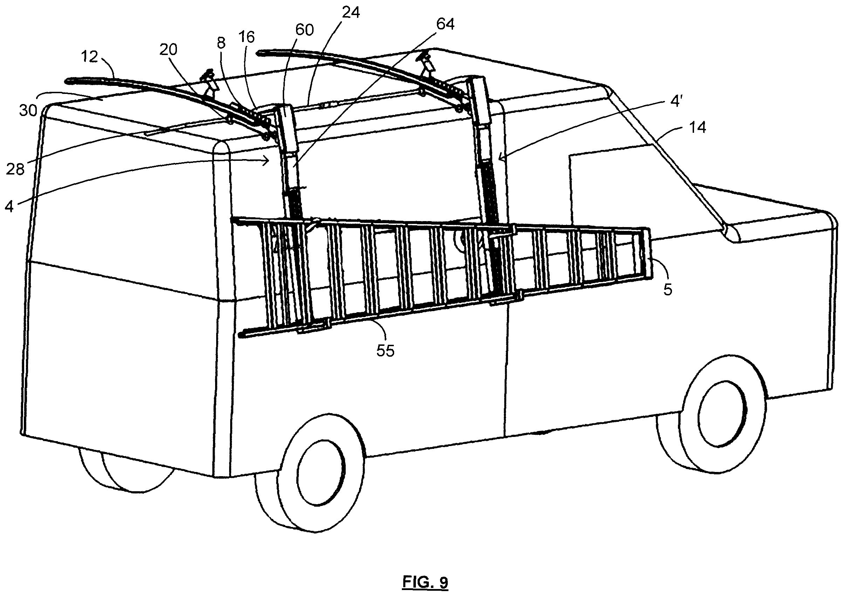

Referring now to Figures 5 to 9, therein illustrated are various views of the exemplary drop-down utility rack 2 when the exemplary drop-down assembly 4 is in a tool transporting position. The actuating arm 16 is pivoted to a first position. For example, in the first position, the actuating arm 16 is pivoted to a generally reclined position. For example, in the reclined position, the actuating arm 16 can be generally aligned with the base frame 8. As shown in Figures 6 and 9, when the drop-down assembly 4 is mounted onto a roof rack 12 of the vehicle 14, the actuating arm 16 can also be generally aligned with the roof rack 12 and the roof 30 of the vehicle 14. When the drop-down assembly 4 is in the transporting position, the internal member 36 can also be generally aligned with the base frame 8. When mounted onto a roof rack 12 of the vehicle 14, the internal member 36 can also be generally aligned with roof rack 12 and the roof 30 of the vehicle 14.

In the tool transporting position, the internal member 36 is displaced relative to the coupling point 44 such that the coupling point 44 is positioned along a lower portion of the internal member 36. For example, the coupling point 44 is positioned near a free end 80 of the internal member 36.

The external member 52 is also substantially aligned with the base frame 8. When mounted onto the roof rack 12 of the vehicle 14, the external member 52 is also substantially aligned with the roof rack 12 and the roof 30 of the vehicle 14. Furthermore, the external member 52 is in a retracted position relative to the internal member 36. In the retracted position, the external member 52 is displaced relative to the internal member 36 such that the external member 52 overlaps a significant portion of the internal member 36. For example, the external member 52 can overlap substantially an entire length of the internal member 36. For example, the free end 80 of the internal member 36 can be positioned near a free end 82 of the external member 52.

In the transporting position, the telescoping arm 40 is generally aligned with the base frame 8. When mounted onto the roof rack 12 of the vehicle 14, the telescoping arm 40 is generally aligned with the roof rack 12. It will be appreciated that the roof rack 12 is generally horizontal with the roof 30 of the vehicle 14. As a result, the telescoping arm 40 is also generally horizontal with the roof 30 of the vehicle 14. For example, when a ladder 5 is being transported, the ladder 5 will also be supported horizontally by the support brackets 54 of the telescoping arm 40. It will be appreciated that the horizontal position of the ladder 5 provides stability during transportation with the vehicle 14.

According to exemplary embodiments where the actuating arm 16 is coupled to the external member 52 of the telescoping arm 40 via the A-frame 56, the A-frame 56 is in a closed position when the drop-down assembly 4 is in a transporting position. In the closed position, the fixed arm 60 and pivotal arm 64 of the A-frame 56 define an angle 84. For example, the angle 84 is an acute angle. It will be appreciated that a small angle 84 of the A-frame causes the external member 52 to overlap a significant portion of the internal member 36. For example, the angle 84 is sufficiently small to allow the external member 52 to substantially overlap the entire length of the internal member 36. In one exemplary embodiment, the fixed arm 60 can be at least partially overlapping with pivotal arm 64.

In the transporting position, the guiding joint 48 restricts movement of the telescoping arm 40 relative to the base frame 8. For example, the guiding joint 48 restricts movement of the telescoping arm 40 in a direction perpendicular to the base frame 8. For example, when the drop-down assembly 4 is mounted onto the roof rack 12 of the vehicle 14, the guiding joint 48 restricts movement of the telescoping arm 40 in an up-down direction relative to the roof 30 of the vehicle 14. Restricting the movement of the telescoping arm 40 in the up-down direction further restricts the pivotal movement of the actuating arm 16 about the pivot point 20, thereby reducing stress on the actuating arm 16. Restricting the movement of the telescoping arm 40 further reduces forces on the tools supported by the drop-down assembly 4.

Referring back to Figures 1 to 4 in the intermediate position, the actuating arm 16 has been pivoted away from its reclined position. For example, the actuating arm 16 is at an inclined position relative to the base frame 8. When mounted onto a roof rack 12 of the vehicle 14, the actuating arm 16 is also at an inclined position relative to the roof rack 12. For example, the actuating arm 16 is pivoted from the reclined position to the intermediate position by rotating the lever 28 to cause the rotating bar 24 to rotate. For example, the lever 28 is rotated in a counterclockwise motion.

As a result of the pivoting of the actuating arm 16, the internal member 36 is also pivoted away from the base frame 8. For example, the internal member 36 is at an inclined position relative to the base frame 8. Since the coupling point 44 is located at a position that is remote from the position defined by the coupling of the actuating arm 16 to the base frame 8, the center of rotation of the pivoting movement of the actuating arm 16 is not the same as the center of rotation of the pivoting movement of the internal member 36. As the actuating arm 16 is pivoted away from its reclined position, it exerts a force on the internal member 36. In particular, the force exerted on the internal member 36 has a non-zero component in the direction of the length of the internal member 36. Pivotal movement of the actuating arm 16 away from its reclined position causes the internal member 36 to be slidably displaced in the direction of the free end 82 of the external member 52 of the telescoping arm 40. The coupling point 44 is displaced relative to the internal member 36 in the direction of the coupled end 34 of the internal member 36.

As a result of the pivoting of the actuating arm 16, external member 52 is also pivoted away from base frame 8. It will be appreciated that the external member 52 is at an inclined position relative to the base frame 8. Since the external member 52 overlaps the internal member 36, the external member 52 has the same axis of rotation as the internal member 36. Both the external member 52 and the internal member 36 rotate about the coupling point 44. Since the coupling point 44 is located at a position that is remote from the position defined by the coupling of the actuating arm 16 to the base frame 8, the center of rotation of the pivoting movement of the actuating arm 16 is not the same as the center of rotation of the pivoting movement of the external member 52. As the actuating arm 16 is pivoted away from its reclined position, it exerts a force on the external member 52 through the composite linkage 56. In particular, the force exerted on the external member 52 has a non-zero component in the direction of the length of the external member 52. Pivotal movement of the actuating arm 16 away from its closed position causes the external member 52 to be slidably displaced in the direction away from the coupled end 34 of the internal member 36.

The actuating arm 16 can be pivoted from its first position to a second position. For example, in the second position the actuating arm 16 is substantially upright. For example, in the second position the actuating arm 16 is perpendicular to the base frame 8.

According to various exemplary embodiments, over at least a portion of the pivotal movement of the actuating arm 16 from its reclined position to the upright position, the sliding displacement of the internal member 36 relative to the coupling point 44 occurs simultaneously with the sliding displacement of the external member 52 relative to the internal member 36.

Over at least a portion of the pivotal movement of the actuating arm 16 from the reclined position to the upright position, the force exerted on the external member 52 through the composite linkage 56 is greater than the force exerted on the internal member 36. Over this portion of pivotal movement, for the same movement of the actuating arm 16, the rate of displacement of the external member 52 relative to the internal member 36 is greater than the rate of displacement of the internal member 36 relative to the coupling point 44. As a result, the external member 52 is slidably displaced relative to the internal member 36. The free end 82 of the external member 52 is displaced away from the free end 80 of the internal member 36. The overall length of the telescoping arm 40 is increased as a result of the displacement of the external member 52 relative to the internal member 36.

According to various exemplary embodiments where the composite linkage 56 is an A-frame formed of a fixed arm 60 and a pivotal arm 64, the fixed arm 60 rotates with the pivotal movement of the actuating arm 16. As the actuating arm 16 is pivoted away from its reclined position, the fixed arm 60 exerts a force on the pivotal arm 64 through the pivotal joint 68. The force exerted by the fixed arm 60 causes the pivotal arm 64 to be rotated about the pivotal joint 68 away from the fixed arm 60. As a result, the angle 84 defined by the fixed arm 60 and the pivotal arm 64 is increased as the actuating arm 16 is pivoted. As the actuating arm 16 is pivoted away from the closed position, and as a result of the force exerted by the fixed arm 60, the pivotal arm 64 further exerts a force on the external member 52. It will be understood that the force exerted by the pivotal arm 64 on the external member 52 corresponds to the force exerted on the external member 52 through the composite linkage 56 described herein.

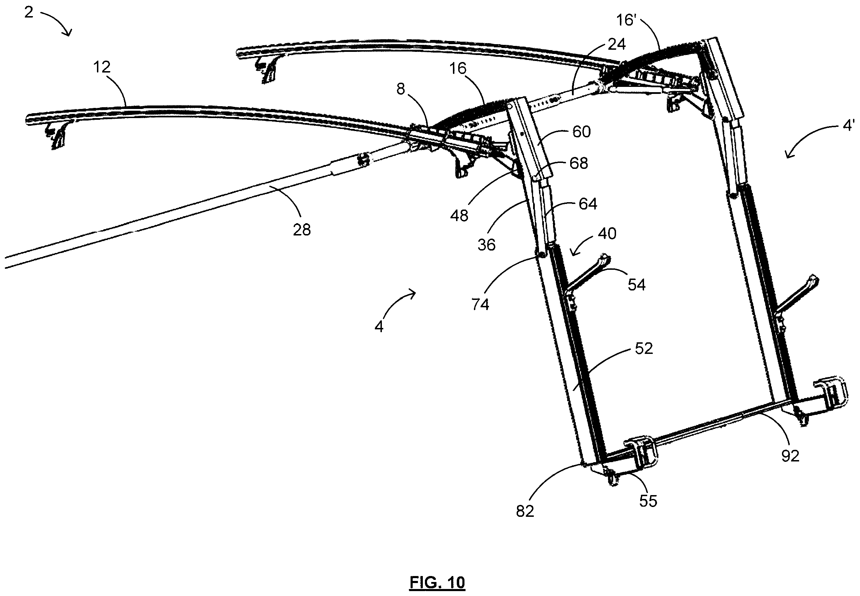

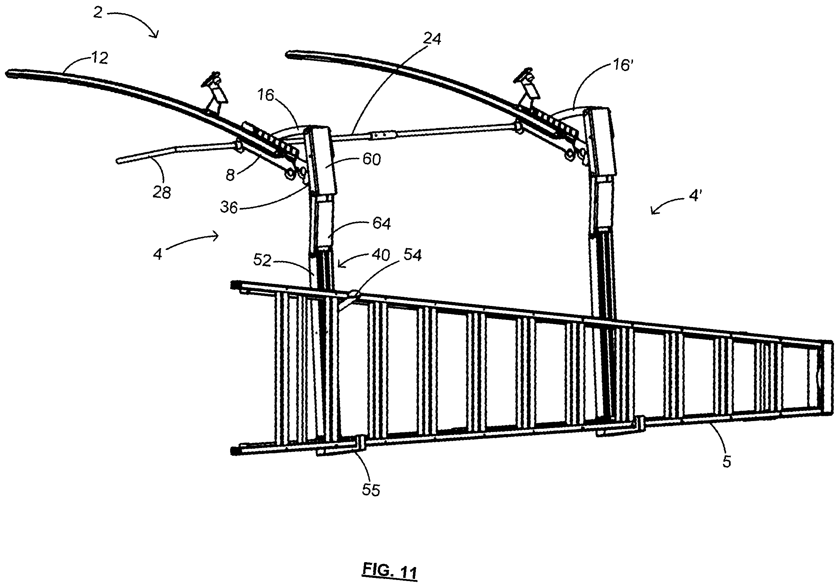

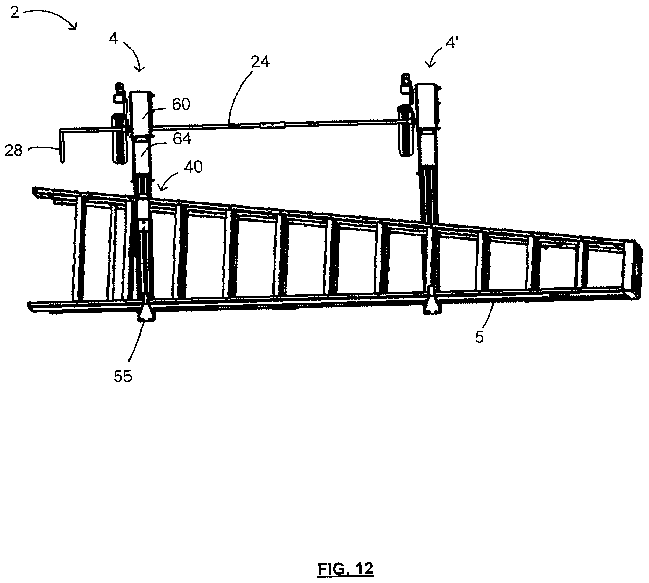

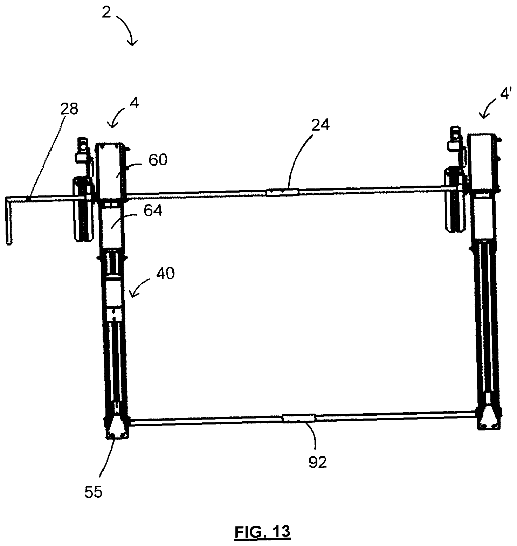

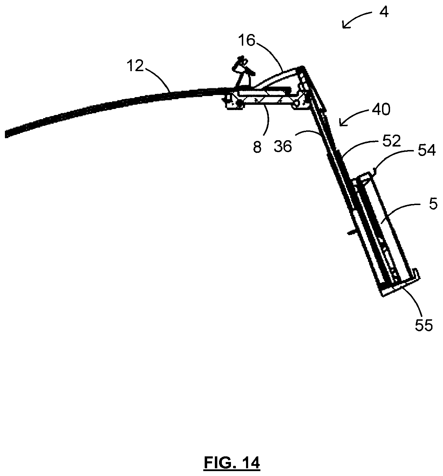

Referring now to Figures 9 to 14, therein illustrated are various views of the exemplary drop-down utility rack 2 wherein the exemplary drop-down assembly 4 is in a tool access position. The actuating arm 16 is pivoted to its second position, such as the upright position. For example, as shown, the actuating arm 16 can be upright relative to the base frame 8. When mounted onto the roof rack 12 of the vehicle 14, the actuating arm 16 can be upright relative to the roof rack 12.

When the drop-down assembly 4 is in the tool access position, the telescoping arm 40 is inclined in relation to the base frame 8. For example, the telescoping arm 40 extends downwardly over a side of vehicle 14. Furthermore, the telescoping arm 40 reaches an extended position.

When the telescoping arm 40 is in the extended position, the internal member 36 is inclined in relation to the base frame 8. As shown in Figure 9, when mounted onto the roof rack 12 of the vehicle 14, the internal member 36 is transverse to the roof rack 12 and the roof 30 of the vehicle 14 and is substantially vertical on the side of the vehicle 14. The internal member 36 has been displaced relative to the coupling point 44 such that the coupling point 44 is positioned along an upper portion of the internal member 36. For example, the coupling point 44 is positioned near a coupled end 34 of the internal member 36 near the actuating arm 16.

When the telescoping arm 40 is in the extended position, the external member 52 is also inclined in relation to the base frame 8. When mounted onto the roof rack 12 of the vehicle 14, the external member 52 is transverse to the roof rack 12 and the roof 30 of the vehicle 14 and is substantially vertical on the side of the vehicle 14. The external member 52 has been displaced relative to the internal member 36 such that the coupled end 74 of the external member 52 is positioned near the free end 80 of the internal member 36. The external member 52 has been displaced relative to the internal member 36 such that a significant portion of the internal member 36 is exposed and a reduced portion of the internal member 36 overlaps the external member 52. It will be appreciated that in the extended position, the telescoping arm 40 has a significantly greater length than its length when it is in the retracted position.

When the drop-down utility rack 2 is mounted onto the vehicle 14 and the drop-down assembly 4 is in its tool access position, the external member 52 extends downwardly from the internal member 36. The telescoping arm 40 extends downwardly from the roof 30 of the vehicle 14. The support bracket 54 of the telescoping arm 40 is lowered from the roof 30 and is positioned on the side of the vehicle 14. The telescoping arm 40 can be generally aligned with a side of the vehicle 14. Alternatively, the telescoping arm 40 can be at a slight incline relative to the side of the vehicle 14. As a result, a tool being at least partially supported within the support bracket 54 is also lowered from the roof 30 and positioned on the side of the vehicle 14. It will be appreciated that a tool being in a lowered position allows an operator to easily access this tool, such as the ladder 5 or other tools, being supported by the drop-down utility rack 2.

According to various exemplary embodiments where the composite linkage 56 is an A-frame formed of the fixed arm 60 and the pivotal arm 64, the A-frame 56 is in an open position when the drop-down assembly 4 is in a tool access position. In the open position, the pivotal arm 64 has been rotated away from the fixed arm 60 to define an obtuse angle 84. According to various exemplary embodiments, the fixed arm 60 and the pivotal arm 64 can be generally aligned such that the angle 84 approaches 180°.

The drop-down assembly 4 can be returned from the tool access position to the tool transporting position through pivotal movement of the actuating arm 16 from its upright position back to its reclined position. For example, the actuating arm 16 is pivoted from the upright position back to its reclined position by rotating the lever 28 to cause the rotating bar 24 to rotate. For example, the lever 28 is rotated in a clockwise motion.

As a result of the pivoting of the actuating arm 16, the internal member 36 is also pivoted. As the actuating arm 16 is pivoted towards its reclined position, it exerts a force on the internal member 36. In particular, the force exerted on the internal member 36 has a non-zero component in the direction of the length of internal member 36. The pivotal movement of the actuating arm 16 towards its reclined position causes the internal member 36 to be slidably displaced in a direction away from the free end 82 of the external member 52 of the telescoping arm 40. The coupling point 44 is displaced relative to the internal member 36 in the direction of the free end 80 of the internal member 36.

As a result of the pivoting of the actuating arm 16, the external member 52 is also pivoted. As the actuating arm 16 is pivoted towards its reclined position, it exerts a force on the external member 52 through the composite linkage 56. In particular, the force exerted on the external member 52 has a non-zero component in the direction of the length of the external member 52. The pivotal movement of the actuating arm 16 towards its reclined position causes the external member 52 to be slidably displaced in a direction towards the coupled end 34 of the internal member 36.

Over at least a portion of the pivotal movement of the actuating arm 16 from the closed position to the open position, the force exerted on the external member 52 through the composite linkage 56 is greater than the force exerted on the internal member 36. Over this portion of pivotal movement, for the same movement of the actuating arm 16, the rate of displacement of the external member 52 relative to the internal member 36 is greater than the rate of displacement of the internal member 36 relative to the coupling point 44. As a result, the external member 52 is slidably displaced relative to the internal member 36. The free end 82 of the external member 52 is displaced towards the internal member 36. The overall length of the telescoping arm 40 is decreased as a result of the displacement of the external member 52 relative to the internal member 36.

According to various exemplary embodiments where the composite linkage 56 is an A-frame formed of the fixed arm 60 and the pivotal arm 64, the fixed arm 60 rotates with the pivotal movement of the actuating arm 16. As the actuating arm 16 is pivoted towards its reclined position, the fixed arm 60 exerts a force on the pivotal arm 64 through the pivotal joint 68. The force exerted by the fixed arm 60 causes the pivotal arm 64 to be rotated about the pivotal joint 68 towards the fixed arm 60. As a result, the angle 84 defined by the fixed arm 60 and pivotal arm 64 is decreased as the actuating arm 16 is pivoted towards its reclined position. As the actuating arm 16 is pivoted towards its reclined position, and as a result of the force exerted by the fixed arm 60, the pivotal arm 64 further exerts a force on the external member 52. It will be understood that the force exerted by the pivotal arm 64 on external member 52 corresponds to the force exerted on the external member 52 through the composite linkage 56 described herein.

For example, due to the telescoping arm 40 entering the extended position and due to a small portion of the internal member 36 overlapping with the external member 52, the internal member 36 can become misaligned with the external member 52. According to various exemplary embodiments, guiding joint 48 provides re-alignment of the internal member 36 with the external member 52 as the telescoping arm 40 is shifted from its extended position back to its retracted position.

It will be appreciated that by providing a pivotal and slidable coupling of the internal member 36 to the base frame 8, a saving is achieved in the space required for the internal member 36 to complete its full range of motion. For example, where the internal member 36 is only pivotally coupled to the base frame 8, the entire length of the internal member 36 would be pivoting. By contrast, according to exemplary embodiments described herein, the length of the internal member 36 being rotated on one side of the coupling point 44 is decreased due to the sliding displacement of the internal member 36 relative to the coupling point 44. Similarly, the sliding displacement of the external member 52 relative to the internal member 36 reduces the length of the external member 52 that must be rotated. Overall, the sliding motions of the internal member 36 and external member 52 allow the length of the telescoping arm 40 to be shortened, thereby providing a reduction in the space required by the drop-down assembly 4.

It will be appreciated that the space required for the drop-down assembly 4 to complete its full range of motions between the tool transporting position and the tool access position is defined by the pivoting of the actuating arm 16 and the composite linkage 56. Advantageously, the sliding motions of the internal member 36 and external member 52 of the telescoping arm 40 allow the length of the actuating arm 16 to be shortened, thereby also providing a reduction in the space required for the drop-down assembly 4 to complete its motion between the tool transporting position and the tool access position. In particular, the space required above the vehicle 14 is reduced. For example, the reduction in space required becomes important when the drop-down assembly 4 is to be operated in a location with overhead space restrictions, such as with a garage having a low ceiling.

According to various exemplary embodiments, the drop-down assembly 4 further has an actuator 88. A stationary portion of the actuator 88 is coupled to the base frame 8. An actuated portion of the actuator 88 can be coupled to the actuating arm 16 to assist the pivoting of the actuating arm 16. For example the actuated portion of the actuated arm is coupled to the actuating arm at a coupling point 96 remote from the axis of pivot 20 of the actuating arm 16. For example, the actuator 88 may be a spring loaded shock, electric actuator or hydraulic actuator.

According to one exemplary embodiment, the actuator 88 assists the pivotal movement of the actuating arm 16 from its reclined position to its upright position. In particular, the actuator 88 applies a force on the actuating arm 16 from the base frame 8 in a direction opposite the pivotal movement of the actuating arm 16 to restrict the movement of the actuating arm 16. It will be appreciated that the forced applied by the actuator 88 on the actuating arm 16 restricts the rotational velocity of the actuating arm 16. Restricting the velocity of the movement of the actuating arm 16 ensures smooth displacement of the internal member 36, external member 52, and composite linkage 56. In particular, it ensures smooth sliding displacement of the external member 52 relative to the internal member 36.

According to one exemplary embodiment, the actuator 88 assists the pivotal movement of the actuating arm 16 from its upright position to its reclined position. In particular, the actuator 88 applies a force on the actuating arm 16 from the base frame 8 in the same direction as the pivotal movement of the actuating arm 16 towards its reclined position. The assisting force from the actuator 88 assists in causing the telescoping arm 40 to return to its retracted position. For example, movement of the internal member 36 relative to the coupling point 44 is assisted. Similarly movement of the external member 52 towards the coupling end of the internal member 36 is also assisted.

According to various exemplary embodiments, the drop-down utility rack 2 has two similar drop-down assemblies 4 and 4'. The first drop-down assembly 4 is attached to a first track of the roof rack 12 of the vehicle 14. The second drop-down assembly 4' is attached to a second track of the roof rack 12 the vehicle 14. For example, the first track and the second track are parallel and spaced apart in a front to back direction of the vehicle 14. Accordingly, the first drop-down assembly 4 and the second drop-down assembly 4' are also spaced apart along the length of the vehicle 14. For example, the first drop-down assembly 4 can support a first portion of the ladder 5 and the second drop-down assembly 4' can support a second portion of the ladder 5.

For example, the first drop-down assembly 4 and the second assembly 4' can be attached together via a transverse support bar 92. For example, the transverse support bar 92 can be telescoping to have a variable length. The length of the transverse support bar 92 can be adjusted according to the distance between the first drop-down assembly 4 and the second drop-down assembly 4'.

For example, the actuating arm 16 and actuating arm 16' of the second assembly 4' can be attached to the same rotating bar 24. For example, the rotating bar 24 can be telescoping to have a variable length. The length of the rotating bar can be adjusted according to the distance between the first drop-down assembly 4 and second dropdown assembly 4'. For example, the second assembly 4' also has a respective actuator 88' for assisting pivotal movement of the second actuating arm 16'.

## Claims

1. A drop-down assembly comprising:
- a base frame;
- a variable-length arm having a first member and a second member, the first member slidably coupled to the base frame via a guiding joint to define a coupling point and the second member slidably coupled to the first member;
- an actuating arm pivotally coupled at a first end to the base frame remote from the coupling point and pivotally coupled at a second end to a coupled end of the first member, the actuating arm being pivotal between first and second positions, the pivoting of the actuating arm from the first position to the second position causing the variable-length arm to displace from a tool transporting position thereof to a tool access position thereof, **characterized in that** the actuating arm is further coupled to the second member via a composite linkage, the pivoting of the actuating arm from the first position to the second position causing the first member to pivot about the coupling point and slide relative to the coupling point and causing via the composite linkage the second member to slide relative to the first member.

2. The drop-down assembly of claim 1, wherein the variable-length arm is a telescoping arm, the first member and the second member being in a telescoping relationship.

3. The drop-down assembly of claims 1 or 2, wherein in the tool transporting position the variable-length arm is positioned at a first angle with the base frame and in the tool access position the variable-length arm is positioned at a second angle with the base frame.

4. The drop-down assembly of claim 3, wherein in the tool transporting position the variable-length arm is substantially aligned with the base frame and in the tool access position the variable-length arm is inclined in relation to the base frame.

5. The drop-down assembly of claims 1 or 2, wherein in the tool transporting position the variable-length arm is in a retracted position and in the tool access position the variable-length arm is in an extended position.

6. The drop-down assembly of claim 5, wherein in the retracted position the first member and the second member substantially overlap and in the extended position a reduced portion of the first member and the second member overlap.

7. The drop-down assembly of claims 3 or 4, wherein in the tool transporting position the variable-length arm is in a retracted position and in the tool access position the variable-length arm is in an extended position.

8. The drop-down assembly of claim 7, wherein in the retracted position the first member and the second member substantially overlap and in the extended position a reduced portion of the first member and the second member overlap.

9. The drop-down assembly of any one of claims 1 to 8, wherein the first member is internal to the second member.

10. The drop-down assembly of any one of claims 1 to 9, wherein the actuating arm is reclined in the first position and is upright in the second position.

11. The drop-down assembly of claim 1, wherein when pivoting from the first position to the second position, the actuating arm exerts a force on the first member towards a free end of the second member and exerts a force on the second member via the composite linkage away from the coupled end of the first member.

12. The drop-down assembly claim 11, wherein the composite linkage includes an A-frame having a fixed arm fixedly coupled at a first end to the actuating arm and a pivotal arm pivotally coupled at first and second ends thereof respectively to a second end of the fixed arm and to the second member, the pivoting of the actuating arm from the first position to the second position causing the pivotal arm to pivot away from the fixed arm and exert a force on the second member away from the coupled end of the first member.

13. The drop-down assembly of any one of claims 1 to 12, further comprising an actuator for assisting the actuating arm to be pivoted between the first and second positions.

14. The drop-down assembly of any one of claims 1 to 13, wherein a lever is provided for pivoting the actuating arm between the first position and the second position.

15. The drop-down assembly of claim 14, wherein the lever is adapted to be removably attached to the drop-down assembly for operating the drop-down assembly so that the variable-length arm can be displaced between the tool transporting position thereof and the tool access position thereof, and wherein the lever can be stored remotely of the drop-down assembly when actuation of the drop-down assembly is not required.

16. The drop-down assembly of any one of claims 1 to 15, wherein the base frame is adapted to be mounted onto a roof rack of a vehicle.

17. The drop-down assembly of claim 16, wherein when the base frame is mounted onto a roof rack of a vehicle, in the tool transporting position the variable-length arm is aligned with the roof and in the tool access position the variable-length arm extends over a side of the vehicle.

18. The drop-down assembly of any one of claims 1 to 17, further comprising brackets attached to the second member for supporting a ladder.

19. A drop-down utility rack for supporting a ladder comprising a first drop-down assembly according to any one of claims 1 to 18 and a second drop-down assembly according to any one of claims 1 to 18, the first and second assemblies being substantially parallel and spaced apart, the variable-length arm of the first assembly being coupled to the variable-length arm of the second assembly via a transverse bar.

20. The drop-down utility rack of claim 19, wherein the actuating arm of the first assembly and the actuating arm of the second assembly are both attached to a transverse rotating rod, rotation of the rotating rod causing the actuating arms to be pivoted.

## Patentansprüche

1. Absenkaufbau, umfassend:
- einen Grundrahmen;
- einen Arm variabler Länge mit einem ersten Glied und einem zweiten Glied, wobei das erste Glied über ein Führungsgelenk gleitbar an den Grundrahmen gekoppelt ist, um einen Kuppelpunkt zu definieren, und das zweite Glied gleitbar an das erste Glied gekoppelt ist;
- einen Betätigungsarm, der vom Kuppelpunkt entfernt schwenkbar über ein erstes Ende an den Grundrahmen gekoppelt ist und schwenkbar über ein zweites Ende an ein Kuppelende des ersten Glieds gekoppelt ist, wobei der Betätigungsarm zwischen einer ersten und einer zweiten Position schwenkbar ist und die Schwenkung des Betätigungsarms von der ersten Position in die zweite Position die Verschiebung des Arms variabler Länge von einer Werkzeug transportierenden Position desselben in eine Werkzeug-Zugangsposition desselben bewirkt,
**dadurch gekennzeichnet, dass** der Betätigungsarm weiterhin über eine Verbundkupplung an das zweite Glied gekoppelt ist, wobei die Schwenkung des Arms variabler Länge von der ersten Position in die zweite Position bewirkt, dass das erste Glied um den Kuppelpunkt schwenkt und relativ zum Kuppelpunkt gleitet und das zweite Glied über die Verbundkupplung relativ zum ersten Glied gleitet.

2. Absenkaufbau nach Anspruch 1, wobei der Arm variabler Länge ein Teleskoparm ist und das erste Glied und das zweite Glied ineinander schiebbar sind.

3. Absenkaufbau nach Anspruch 1 oder 2, wobei der Arm variabler Länge in der Werkzeug transportierenden Position in einem ersten Winkel zum Grundrahmen positioniert ist und der Arm variabler Länge in der Werkzeug-Zugangsposition in einem zweiten Winkel zum Grundrahmen positioniert ist.

4. Absenkaufbau nach Anspruch 3, wobei der Arm variabler Länge in der Werkzeug transportierenden Position im Wesentlichen mit dem Grundrahmen fluchtet und der Arm variabler Länge in der Werkzeug-Zugangsposition in Bezug auf den Grundrahmen geneigt ist.

5. Absenkaufbau nach Anspruch 1 oder 2, wobei sich der Arm variabler Länge in der Werkzeug transportierenden Position in einer eingezogenen Position befindet und sich der Arm variabler Länge in der Werkzeug-Zugangsposition in einer ausgefahrenen Position befindet.

6. Absenkaufbau nach Anspruch 5, wobei sich das erste Glied und das zweite Glied in der eingezogenen Position im Wesentlichen überlappen und sich das erste Glied und das zweite Glied in der ausgefahrenen Position in einem kleinen Bereich überlappen.

7. Absenkaufbau nach Anspruch 3 oder 4, wobei sich der Arm variabler Länge in der Werkzeug transportierenden Position in einer eingezogenen Position befindet und sich der Arm variabler Länge in der Werkzeug-Zugangsposition in einer ausgefahrenen Position befindet.

8. Absenkaufbau nach Anspruch 5, wobei sich das erste Glied und das zweite Glied in der eingezogenen Position im Wesentlichen überlappen und sich das erste Glied und das zweite Glied in der ausgefahrenen Position in einem kleinen Bereich überlappen.

9. Absenkaufbau nach einem der Ansprüche 1 bis 8, wobei das erste Glied im zweiten Glied steckt.

10. Absenkaufbau nach einem der Ansprüche 1 bis 9, wobei der Betätigungsarm in der ersten Position nach hinten geneigt ist und in der zweiten Position aufrecht steht.

11. Absenkaufbau nach Anspruch 1, wobei der Betätigungsarm beim Schwenken von der ersten Position in die zweite Position eine Kraft auf das erste Glied in Richtung eines freien Endes des zweiten Glieds ausübt und eine Kraft auf das zweite Glied über die Verbundkupplung in die dem gekoppelten Ende des ersten Glieds entgegengesetzte Richtung ausübt.

12. Absenkaufbau nach Anspruch 11, wobei die Verbundkupplung einen A-Rahmen enthält, der einen festen Arm, der über ein erstes Ende an den Betätigungsarm fest gekoppelt ist, und einen schwenkbaren Arm, der über erste und zweite Enden desselben an ein zweites Ende des festen Arms bzw. an das zweite Glied schwenkbar gekoppelt ist, aufweist, wobei die Schwenkung des Betätigungsarms von der ersten Position in die zweite Position bewirkt, dass der schwenkbare Arm vom festen Arm wegschwenkt und eine Kraft auf das zweite Glied in die dem gekoppelten Ende des ersten Glieds entgegengesetzte Richtung ausübt.

13. Absenkaufbau nach einem der Ansprüche 1 bis 12, der weiterhin einen Stellmotor umfasst, um den Betätigungsarm bei der Schwenkbewegung zwischen der ersten und der zweiten Position zu unterstützen.

14. Absenkaufbau nach einem der Ansprüche 1 bis 13, wobei zur Schwenkung des Betätigungsarm zwischen der ersten und der zweiten Position ein Hebel bereitgestellt wird.

15. Absenkaufbau nach Anspruch 14, wobei der Hebel angepasst ist, um lösbar an den Absenkaufbau angebracht zu werden und den Absenkaufbau derart zu betreiben, dass der Arm variabler Länge zwischen der Werkzeug transportierenden Position desselben und der Werkzeug-Zugangsposition desselben verschoben werden kann, und wobei der Hebel vom Absenkaufbau entfernt gelagert werden kann, wenn der Absenkaufbau nicht betätigt zu werden braucht.

16. Absenkaufbau nach einem der Ansprüche 1 bis 15, wobei der Grundrahmen angepasst ist, um auf den Dachgepäckträger eines Fahrzeugs montiert zu werden.

17. Absenkaufbau nach Anspruch 16, wobei der Arm variabler Länge in der Werkzeug transportierenden Position mit dem Dach fluchtet und der Arm variabler Länge in der Werkzeug-Zugangsposition über eine Seite des Fahrzeugs vorsteht, wenn der Grundrahmen auf einem Dachgepäckträger eines Fahrzeugs montiert ist.

18. Absenkaufbau nach einem der Ansprüche 1 bis 17, der weiterhin am zweiten Glied angebrachte Halterungen zum Befestigen einer Leiter umfasst.

19. Absenkgestell zum Befestigen einer Leiter, das einen ersten Absenkaufbau nach einem der Ansprüche 1 bis 18 und einen zweiten Absenkaufbau nach einem der Ansprüche 1 bis 18 umfasst, wobei der erste und der zweite Aufbau im Wesentlichen parallel und beabstandet sind und der Arm variabler Länge des ersten Aufbaus über einen Querbalken an den Arm variabler Länge des zweiten Aufbaus gekoppelt ist.

20. Absenkgestell nach Anspruch 19, wobei der Betätigungsarm des ersten Aufbaus und der Betätigungsarm des zweiten Aufbaus an einer querverlaufenden Drehstange angebracht sind, sodass die Drehung der Drehstange die Schwenkung der Betätigungsarme bewirkt.

## Revendications

1. Assemblage descendant qui comprend :
- une structure de base ;
- un bras à longueur variable ayant un premier membre et un deuxième membre, où le premier membre est couplé de façon coulissante à la structure de base par une articulation de guidage afin de définir un point d'accouplement et le deuxième membre est couplé de façon coulissante au premier membre ;
- un bras de commande couplé de façon pivotante au niveau d'une première extrémité à la structure de base éloignée du point d'accouplement et couplé de façon pivotante au niveau d'une deuxième extrémité à une extrémité couplée du premier membre, le bras de commande étant pivotant entre les première et deuxième positions, où le pivotement du bras de commande de la première position vers la deuxième position entraîne le déplacement du bras à longueur variable d'une position de transport des outils jusqu'à une position d'accès aux outils de ce dernier,
**caractérisé en ce que**
le bras de commande est couplé au deuxième membre par une articulation composée, le pivotement du bras de commande de la première position vers la deuxième position entraîne le pivotement du premier membre autour du point d'accouplement et celui-ci coulisse par rapport au point d'accouplement et entraîne le coulissement du deuxième membre par rapport au premier membre par le biais de l'articulation composée.

2. Assemblage descendant selon la revendication 1, dans lequel le bras à longueur variable est un bras télescopique, le premier membre et le deuxième membre étant montés de façon télescopique.

3. Assemblage descendant selon les revendications 1 ou 2, dans lequel, dans la position de transport d'outils le bras à longueur variable est positionné dans un premier angle avec la structure de base, et dans la position d'accès aux outils, le bras à longueur variable est positionné dans un deuxième angle avec la structure de base.

4. Assemblage descendant selon la revendication 3, dans lequel, dans la position de transport d'outils, le bras à longueur variable est sensiblement aligné avec la structure de base, et dans la position d'accès aux outils, le bras à longueur variable est incliné par rapport à la structure de base.

5. Assemblage descendant selon les revendications 1 ou 2, dans lequel, dans la position de transport d'outils, le bras à longueur variable est en position rétractée, et dans la position d'accès aux outils, le bras à longueur variable est en position étendue.

6. Assemblage descendant selon la revendication 5, dans lequel, en position rétractée, le premier membre et le deuxième membre se chevauchent sensiblement, et en position étendue une portion réduite du premier membre chevauche le deuxième membre.

7. Assemblage descendant selon les revendications 3 ou 4, dans lequel, dans la position de transport d'outils, le bras à longueur variable est en position rétractée, et dans la position d'accès aux outils, le bras à longueur variable est en position étendue.

8. Assemblage descendant selon la revendication 7, dans lequel dans la position rétractée le premier membre et le deuxième membre se chevauchent sensiblement et dans la position étendue une portion réduite du premier membre chevauche le deuxième membre.

9. Assemblage descendant selon l'une quelconque des revendications 1 à 8, dans lequel le premier membre est interne au deuxième membre.

10. Assemblage descendant selon l'une des revendications 1 à 9, dans lequel le bras de commande est incliné dans la première position et droit dans la deuxième position.

11. Assemblage descendant selon la revendication 1, dans lequel, pendant le pivotement de la première position vers la deuxième position, le bras de commande exerce une force sur le premier membre vers une extrémité libre du deuxième membre et il exerce une force sur le deuxième membre par le biais de l'articulation composite loin de l'extrémité couplée du premier membre.

12. Assemblage descendant selon la revendication 11, dans lequel l'articulation composite une structure en A ayant un bras fixe couplé de manière fixe au niveau d'une première extrémité au bras de commande, et un bras pivotant couplé en pivotement, respectivement au niveau des première et deuxième extrémités de ce dernier à une deuxième extrémité du bras fixe et au deuxième membre, où le pivotement du bras de commande de la première position vers la deuxième position entraîne le pivotement du bras pivotant à une distance du bras fixe et exerce une force sur le deuxième membre à une distance de l'extrémité couplée du premier membre.

13. Assemblage descendant selon l'une des revendications 1 à 12, comprenant en outre un actionneur qui permet au bras de commande de pivoter entre les première et deuxième positions.

14. Assemblage descendant selon l'une des revendications 1 à 13, dans lequel un levier est pourvu pour faire pivoter le bras de commande entre la première position et la deuxième position.

15. Assemblage descendant selon la revendication 14, dans lequel le levier est adapté pour être fixé de façon amovible à l'assemblage descendant pour la mise en fonctionnement de l'assemblage descendant, afin de déplacer le bras à longueur variable entre la position de transport d'outils de ce dernier et la position d'accès aux outils de ce dernier, et dans lequel le levier peut être rangé à distance de l'assemblage descendant si la mise en fonctionnement de l'assemblage descendant n'est pas requise.

16. Assemblage descendant selon l'une des revendications 1 à 15, dans lequel la structure de base est adaptée pour être montée sur une galerie de toit pour véhicules.

17. Assemblage descendant selon la revendication 16, dans lequel, lorsque la structure de base est montée sur une galerie de toit d'un véhicule, dans la position de transport d'outils, le bras à longueur variable est aligné avec le toit, et dans la position d'accès aux outils, le bras à longueur variable s'étend au-dessus d'un côté du véhicule.

18. Assemblage descendant selon l'une des revendications 1 à 17, comprenant en outre des supports fixés au deuxième membre pour porter une échelle.

19. Galerie utilitaire descendante de support d'une échelle comprenant un premier assemblage descendant selon l'une des revendications 1 à 18 et un deuxième assemblage descendant selon l'une des revendications 1 à 18, les premier et deuxième assemblages étant sensiblement parallèles et séparés, le bras à longueur variable du premier assemblage étant couplé au bras à longueur variable du deuxième assemblage par une barre transversale.

20. Galerie utilitaire descendante selon la revendication 19, dans lequel le bras de commande du premier assemblage et le bras de commande du deuxième assemblage sont tous deux fixés à une barre rotative transversale, où la rotation de la barre rotative provoque le pivotement des bras de commande.
